# EUROPÄISCHE PATENTANMELDUNG

(11) **EP 4 622 179 A1**
(43) Veröffentlichungstag der Anmeldung: **24.09.2025**
(21) Anmeldenummer: 25162354.2
(22) Anmeldetag: 07.03.2025
(51) Int. Cl.: H04L 12/12

(54) **NETZWERK-SYSTEM FÜR EIN SCHIENENFAHRZEUG**

(30) Priorität: 20.03.2024 DE 102024202657
(71) Anmelder: Siemens Mobility GmbH, 81739 München (DE)
(72) Erfinder: Muxfeldt, Arne, 38110 Braunschweig (DE); Tietge, Matthias, 38106 Braunschweig (DE)
(74) Vertreter: Siemens Patent Attorneys

(57) **Zusammenfassung**

Es wird ein Netzwerk-System (100) für ein Schienenfahrzeug (150) beschrieben, wobei das Netzwerk-System (100) eingerichtet ist zum: Bemerken, wenn ein neuer Teilnehmer in dem Netzwerk-System (100) anwesend ist, Stellen einer Anfrage an den neuen Teilnehmer durch ein Steuersystem (110) und/oder einen autorisierten Teilnehmer, Erhalten einer Antwort des neuen Teilnehmers auf die Anfrage, und Erstellen einer digitalen individuellen Identifizierung des neuen Teilnehmers zumindest teilweise basierend auf der Antwort und/oder einem Antwortparameter durch den neuen Teilnehmer.

## Beschreibung

### Technisches Gebiet

Die Erfindung bezieht sich auf ein Netzwerk-System für ein Schienenfahrzeug, wobei das Netzwerk-System eingerichtet ist zum Bemerken, wenn ein neuer Teilnehmer in dem Netzwerk-System aktiv ist, Stellen einer Anfrage an den neuen Teilnehmer durch ein Steuersystem und/oder einen autorisierten Teilnehmer, Erhalten einer Antwort des neuen Teilnehmers auf die Anfrage, und Erstellen einer digitalen individuellen Identifizierung des neuen Teilnehmers zumindest teilweise basierend auf der Antwort und/oder einem Antwortparameter durch den neuen Teilnehmer. Die Erfindung betrifft ferner das Schienenfahrzeug, eine Schienenfahrzeug-Infrastruktur, und ein Verfahren zum Organisieren eines Netzwerk-Systems.

Die Erfindung kann sich somit auf das technische Gebiet von Schienenfahrzeugen, insbesondere in Hinblick auf Kommunikationsnetzwerke, beziehen.

### Technischer Hintergrund

Schienenfahrzeuge, insbesondere Züge, weisen gewöhnlich eine Mehrzahl von Wagen auf, welche in verschiedener Weise miteinander gekoppelt werden können. Eine solche Kopplung beinhaltet eine mechanische Wagenkopplung und in den meisten Fällen auch eine elektrische Kopplung, insbesondere über ein Stromkabel. Heutzutage sind die mechanische und elektrische Verbindung aber oftmals nicht mehr ausreichend, denn auch eine kommunikative Kopplung zur Datenübertragung kann erwünscht bzw. notwendig sein.

Es existiert mittlerweile eine Vielzahl von Signalen, welche zwischen den Wagen eines Zuges ausgetauscht werden (müssen). Diese umfassen beispielsweise fahrzeuginterne Netzwerke, insbesondere MVB (Multi-Vehicle-Bus) und WTB (Wire-Train-Bus), Ethernet Verbindungen, oder Kommunikation-basierte Zugsteuerung, z.B. Trainguard MT (Modular Train Control System).

Auf Fahrzeugen werden nun immer mehr Netzwerk-Systeme mit digitalen Busschnittstellen verbunden. Teilweise enden die Busschnittstellen im Fahrgastraum oder sind nur durch Abdeckungen geschützt.

Selbst wenn auf dem Bus verschlüsselt kommuniziert wird, kann die Buskommunikation durch andere Teilnehmer gestört werden, indem zum Beispiel der Bus mit Nachrichten geflutet oder Fehler in der Implementierung ausgenutzt werden. Implementierungsfehler/Sicherheitslücken können zu Fehlfunktion oder Missbrauch von Buskomponenten führen.

Durch die zunehmend stärkere Verbreitung von Busschnittstellen im Fahrzeug und die leichtere Zugänglichkeit steigt das Gefährdungsrisiko. Obwohl die Busschnittstellen gewöhnlich physikalisch von den Fahrgästen getrennt sind (z.B. mittels Abdeckungen bzw. Kabelverläufen durch Wände/Decken/Boden) kann sich ein Angreifer prinzipiell durch Entfernen der Abdeckungen Zugang zu den Busschnittstellen verschaffen. Neben den Busschnittstellen können aber auch Netzwerkkabel direkt angezapft bzw. elektrisch kontaktiert werden. Auch in ein drahtloses Netzwerk kann ein solcher Eingriff (z.B. über einen Hackerangriff) gelingen.

Das Netzwerk-System kann mit vielen Funktionen des Schienenfahrzeugs verbunden sein, so auch mit Sicherheit-relevanten Funktionen wie z.B. Bremsen oder Türen. Es besteht somit ein Bedarf (auch aus gesetzlicher Sichtweise) das Netzwerk-System effizient gegen Angriffe zu schützen. Insbesondere müssten neue Teilnehmer in der Buskommunikation identifiziert werden können, so dass (aufgrund von Sicherheitslücken) manipulierte Teilnehmer erkannt werden können.

Ein weiteres Problem kann darin bestehen, dass z.B. für Wartungszwecke Wartungslaptops oder Dongles mit einem Bus verbunden werden. Werden diese Geräte nach den Wartungsarbeiten vergessen, können sie sich negativ auf die Busfunktion im Betrieb auswirken. Ein Angreifer kann sich z.B. über ein solches Wartungswerkzeug einen autorisierten Zugang zum Netzwerk verschaffen.

Sollte ein Bus über die Systemgrenze eines Herstellers gehen, wie zum Beispiel der MVB-Bus auf Fahrzeugen, so kann ferner das Problem bestehen, dass der Hersteller auf der anderen Seite der Systemgrenze seine Hard- oder Software ändert.

Bisher wird das Problem durch Einsatzbedingungen gelöst, welche schlicht die Verwendung anderer Bus-Teilnehmer verbieten, wie z.B. bei Trainguard MT. Weiterhin werden mechanische Barrieren (abschließbare Schränke und unzugängliche Kabelkanäle) vorgesehen, die jedoch beschädigt und außer Funktion gesetzt werden können.

### Zusammenfassung der Erfindung

Es kann ein Bedarf bestehen, ein Netzwerk-System für ein Schienenfahrzeug effizient und zuverlässig zu betreiben.

Ein Netzwerk-System, ein Schienenfahrzeug, eine Schienenfahrzeug-Infrastruktur, und ein Verfahren werden im Folgenden beschrieben.

Gemäß einem ersten Aspekt der Erfindung wird ein Netzwerk-System (z.B. ein Bus-Netzwerk bzw. ein Bus-Kommunikationssystem) für ein Schienenfahrzeug (z.B. ein Zug mit einer Mehrzahl von Wagen) beschrieben, wobei das Netzwerk-System (bzw. ein Steuersystem des Netzwerk-Systems) eingerichtet ist zum:
i) Bemerken, wenn ein neuer Teilnehmer in dem Netzwerk-System anwesend (insbesondere aktiv) ist (z.B. weil eine Aktion durchgeführt wird von einem nicht identifizierten/autorisierten Teilnehmer),
ii) Stellen einer Anfrage (z.B. nach einer System-internen Information) an den neuen Teilnehmer durch ein Steuersystem und/oder einen (insbesondere identifizierten/autorisierten) Teilnehmer des Netzwerk-Systems,
iii) Erhalten einer Antwort (an dem Steuersystem und/oder dem Teilnehmer) des neuen Teilnehmers auf die Anfrage, und
iv) Erstellen einer digitalen individuellen Identifizierung (bzw. ein digitaler Fingerprint) des neuen Teilnehmers zumindest teilweise basierend auf der Antwort (z.B. bezüglich der System-internen Information) und/oder einem Antwortparameter (z.B. einer Bearbeitungszeit) des neuen Teilnehmers.

Gemäß einem zweiten Aspekt der Erfindung wird ein Schienenfahrzeug beschrieben, welches ein Netzwerk-System wie oben beschrieben aufweist. Insbesondere kann sich das netzwerk-System durch eine Mehrzahl (insbesondere alle) Wagen des Schienenfahrzeugs erstecken.

Gemäß einem dritten Aspekt der Erfindung wird eine Schienenfahrzeug-Infrastruktur beschrieben, aufweisend:
i) ein Schienenfahrzeug wie oben beschrieben, und
ii) ein Schienenfahrzeug-Kontrollsystem, insbesondere eine Leitstelle, welches mit dem Netzwerk-System gekoppelt ist. Insbesondere ist das das Schienenfahrzeug-Kontrollsystem eingerichtet das Netzwerk-System zumindest teilweise zu steuern/kontrollieren/regulieren.

Gemäß einem vierten Aspekt der Erfindung wird ein Verfahren zum Organisieren eines Netzwerk-Systems beschrieben, das Verfahren aufweisend:
i) Bemerken, wenn ein neuer Teilnehmer in dem Netzwerk-System anwesend, insbesondere aktiv, ist;
ii) Stellen einer Anfrage an den neuen Teilnehmer durch ein Steuersystem und/oder einen Teilnehmer des Netzwerk-Systems;
iii) Erhalten einer Antwort von dem neuen Teilnehmer auf die Anfrage; und iv) Erstellen einer digitalen individuellen Identifizierung des neuen Teilnehmers zumindest teilweise basierend auf der Antwort und/oder einem Antwortparameter.

Im Kontext des vorliegenden Dokuments kann der Begriff "Netzwerk-System" insbesondere das Netzwerk eines Schienenfahrzeugs bezeichnen. Ein solches Netzwerk kann als Kommunikationsnetzwerk ausgebildet sein und eine Mehrzahl von Systemkomponenten kommunikativ miteinander verbinden/koppeln. Innerhalb des Netzwerk-Systems können bevorzugt Signale bzw. Daten gesendet und/oder empfangen werden. Die Kommunikation kann drahtgebunden und/oder drahtlos sein. Für den drahtgebundenen Betrieb können z.B. Kabel verwendet werden, welche insbesondere durch Wände/Decken/Böden des Schienenfahrzeugs verlaufen. Bezüglich des drahtgebundenen Betriebs kann das Netzwerk-System ein oder mehr Anschlüsse bzw. Schnittstellen (z.B. Ethernet, Stromkabel, USB, etc.) aufweisen. Für den drahtlosen Betrieb kann das Netzwerk-System eine oder mehr Antennen aufweisen. In einem weiteren Beispiel kann das Netzwerk-System ein oder mehr Router, insbesondere WLAN-Router, aufweisen.

In einem Beispiel ist das Netzwerk-System mit einer Vielzahl von Funktionen bzw. physikalischen Vorrichtungen (z.B. Türe, Fenster, Bremsen, Klimaanlage) des Schienenfahrzeugs verbunden. Dadurch kann das Schienenfahrzeug zumindest teilweise über das Netzwerk-System gesteuert bzw. geregelt werden. In einem Beispiel ist das Netzwerk-System dezentral organisiert. In einem weiteren Beispiel weist das Netzwerk-System zumindest ein (zentrale) Steuersystem auf (z.B. eine CPU, einen Prozessor, etc.). Das Steuersystem kann auch außerhalb des Schienenfahrzeugs vorgesehen sein, z.B. in einer Leitstelle angeordnet sein. In einem exemplarischen Beispiel kann das Netzwerk-System als Bus-Netzwerk/Kommunikationssystem ausgestaltet sein. Ein anschauliches Ausführungsbeispiel kann das Trainguard MT System sein.

Im Kontext des vorliegenden Dokuments kann der Begriff "Teilnehmer" insbesondere eine (im Netzwerk digitale) Person bezeichnen, welche über eine entsprechende Hardware in dem Netzwerk-System anwesend ist. In einem Beispiel ist der Teilnehmer passiv und lediglich als Schnüffler aktiv. In einem weiteren Beispiel ist der Teilnehmer aktiv, führt z.B. Wartungsarbeiten aus, liest Daten aus, speist Daten ein, oder übernimmt Funktionen wie das Betätigen von Bremsen. Ein identifizierter/autorisierter Teilnehmer kann hierbei dem Netzwerk-System bzw. einem Steuersystem bekannt sein. Das Netzwerk-System kann eingerichtet sein, kontinuierlich/periodisch die anwesenden Teilnehmer auf deren Identität zu prüfen. Kann ein Teilnehmer nicht identifiziert werden bzw. passt zu keiner vorhandenen Identifizierung, so kann dieser als neuer Teilnehmer angesehen werden.

Im Kontext des vorliegenden Dokuments kann der Begriff "Anfrage" insbesondere bezeichnen, dass ein Teilnehmer direkt kontaktiert wird. Beispielsweise kann der Teilnehmer gefragt werden nach einer Software-Version oder nach einem Passwort. Eine solche Anfrage kann von dem Netzwerk-System gestellt werden, z.B. von einem Steuersystem. Ferner können aber auch die Teilnehmer des Netzwerk-Systems untereinander kommunizieren, so dass auch ein (identifizierter/autorisierter) Teilnehmer eine Anfrage verschicken kann.

Im Kontext des vorliegenden Dokuments kann der Begriff "Antwort" insbesondere bezeichnen, dass ein neuer Teilnehmer auf eine Anfrage antwortet. Beispielsweise kann der neue Teilnehmer eine Frage nach der Software-Version beantworten. Die Antwort kann von (dem Steuersystem von) dem Netzwerk-System und/oder dem anfragenden Teilnehmer erhalten und/oder ausgewertet werden. Hierbei kann zusätzlich oder alternativ zu der eigentlichen Antwort auch ein Antwortparameter betrachtet werden, z.B. eine Übermittlungs- oder Bearbeitungszeit.

Im Kontext des vorliegenden Dokuments kann der Begriff "digitale individuelle Identifizierung" insbesondere bezeichnen, dass jeder Teilnehmer eine eigene Identität (bzw. einen digitalen Fingerprint) erhält, mit dem er eindeutig von den anderen Teilnehmern unterschieden werden kann. Hierfür können unterschiedliche Ansätze oder Kombination dieser Ansätze in Frage kommen. Beispielsweise können ein oder mehr Antworten eine individuelle Identifizierung ergeben, z.B. können die Antworten Software Version, Hardware Version, Passwort zusammen einen individuellen Fingerprint ergeben. In einem Beispiel kommt es nicht darauf an, dass die Antworten korrekt sind. Auch falsche Antworten können charakteristisch für einen Teilnehmer sein. In einem weiteren Beispiel kann die Bearbeitungszeit als Fingerprint für ein bestimmter Gerät des Teilnehmers dienen.

Gemäß einem exemplarischen Ausführungsbeispiel kann die Erfindung auf der Idee basieren, dass ein Netzwerk-System für ein Schienenfahrzeug effizient und zuverlässig betrieben werden kann, wenn die Teilnehmer des Netzwerk-Systems (kontinuierlich) überwacht und mit digitalen individuellen Identifizierungen versehen werden, wobei diese Identifizierungen auf einer Anfrage/Antwort Kommunikation zwischen Steuersystem bzw. anderen Teilnehmern und einem neuen Teilnehmer basieren. Auf diese Weise können unbekannte/unautorisierte Teilnehmer schnell, effizient, und vor allem kontinuierlich erkannt werden. Entsprechende Reaktion wie Ignorieren von Steuerbefehlen dieser Teilnehmer können dann umgesetzt werden. Dieser Ansatz kann im Wesentlichen ohne zusätzliche Eingriffe aus sich selbst heraus funktionieren, denn Teilnehmer können sich z.B. gegenseitig überwachen und/oder ein Steuersystem übernimmt diese Aufgabe automatisiert.

Ein wesentlicher Unterschied zu konventionellen Ansätzen kann darin gesehen ist, dass nicht nur per betrieblicher Regeln oder mechanischer Einhausung das Netzwerk-System vor aggressiven Teilnehmern geschützt wird, sondern die Teilnehmer und/oder das Netzwerk-System sich gegenseitig analysieren und Veränderungen und Manipulationen aufdecken.

In einem exemplarischen Ausführungsbeispiel wird regelmäßig der digitale Fingerabdruck eines jeden Busteilnehmers bestimmt und gespeichert. Sollte ein neuer Teilnehmer hinzugekommen sein, so wird sein Fingerabdruck zum ersten Mal bestimmt. Hat sich der Fingerabdruck eines Teilnehmers zur letzten Prüfung verändert, so deutet dieses an, dass der Teilnehmer entweder getauscht (Komponenten/Hardware-Tausch) oder aktualisiert (Software-Update) wurde oder manipuliert (Ausnutzung einer Sicherheitslücke). Neue oder geänderte Fingerabdrücke können dahingehend überprüft werden, ob eine legitime Veränderung an der Kommunikation vorliegt. Hierbei ist es möglich gegen bekannte Fingerabdrücke zu prüfen, um neue Geräte zu identifizieren oder neue, aber zugelassene, Geräte wie einen Servicelaptop zu identifizieren.

In einem exemplarischen Ausführungsbeispiel nimmt, zum Erstellen des digitalen Fingerabdrucks von Busteilnehmer B, der Busteilnehmer A die verfügbaren Informationen. Dabei werden nicht nur die verwendeten Kommunikationsparameter (z.B. IP und Port und Protokoll bei Netzwerkverbindungen) verwendet, sondern auch weitere über den Bus abfragbare Informationen (z.B. Betriebssystemversionen und über den Bus angebotene Dienst). Zur eindeutigen Identifikation von Busteilnehmern sind jedoch weitere sehr individuelle Informationen wie z.B. bestimmte Antworten und/oder Antwortparameter nötig.

### Exemplarische Ausführungsbeispiele

Gemäß einem Ausführungsbeispiel basiert das Erstellen der digitalen individuellen Identifizierung (zumindest teilweise) auf einer Bearbeitungszeit als Antwortparameter (zwischen der Anfrage (durch Steuereinheit und/oder anderen Teilnehmer) und der Antwort (durch den neuen Teilnehmer)). In anderen Worten wird der Antwortparameter "Bearbeitungszeit" verwendet, um einen spezifischen Fingerprint zu erstellen.

Prozessorsysteme neigen dazu, dass in Abhängigkeit von Parametern wie z.B.
i) Rechenlast im Gesamtsystem (Betriebssystem sowie alle darauf laufende Anwendungen),
ii) Minimale Unterschiede in der Hardware eines Prozessors der gleichen Baureihe (z.B. des Quarzes, welcher den Takt angibt)
iii) Temperaturschwankungen der Umgebung
iv) Spannungsschwankungen
zu minimal unterschiedlichen Bearbeitungszeiten von Anfragen kommt. Dadurch kann die Bearbeitungszeit als überraschend effiziente und zuverlässige Identifizierung verwendet werden.

Dieser Umstand kann z.B. genutzt werden, indem Teilnehmer A Teilnehmer B verschiedene Anfragen über den Bus stellt und die Antwortzeiten misst. Aufgrund Schwankungen der Antwortzeiten lässt sich Teilnehmer B identifizieren. Sollte nun Hardware von Teilnehmer B getauscht werden, ändern sich die Antwortzeiten ebenso, als wenn die Software von Teilnehmer B geändert wird, so dass sich sein gesamter Fingerabdruck verändert hat.

In einem Ausführungsbeispiel basiert das Erstellen der digitalen individuellen Identifizierung auf einer Anfrage nach System-internen Information und/oder der Antwort des neuen Teilnehmers hierauf. Beispielsweise können die Antworten charakteristisch für jeden Teilnehmer sein. Bevorzugt kann hierdurch neben der individuellen Identifizierung auch die Vertrauenswürdigkeit des neuen Teilnehmers überprüft werden.

In einem Ausführungsbeispiel können die Anfragen/Antworten zumindest eine der folgenden betreffen: ein Passwort, eine Prüfsumme, ein Software-Parameter, ein Hardware-Parameter. Hierbei handelt es sich um Netzwerk-System-internes Wissen bzw. Insiderwissen, über das ein nicht autorisierter Teilnehmer nicht verfügen kann. In einem Beispiel kann ein falsches Passwort oder eine falsche Prüfsumme zunächst keine Auswirkung haben. Das falsche Passwort kann eine individuelle Identifizierung ermöglichen und sogleich eine Einstufung als nicht vertrauenswürdig. Der neue Teilnehmer kann dann z.B. im Netzwerk-System unterwegs sein; seine Steuerbefehle werden aber ignoriert. In einem weiteren Beispiel kann nach bestimmten Software-Voraussetzungen gefragt werden oder nach einer bestimmten Hardware die im Schienenfahrzeug verwendet wird. Hierbei kann eine (falsche) Antwort charakteristisch für einen Teilnehmer sein und zugleich eine Einstufung der Vertrauenswürdigkeit ermöglichen.

In einem Ausführungsbeispiel ist die digitale individuelle Identifizierung indikativ für die Vertrauenswürdigkeit des neuen Teilnehmers. Das kann den Vorteil haben, dass die digitale individuelle Identifizierung nicht nur eine eindeutige Bestimmung jedes Teilnehmers erlaubt, sondern auch Informationen zur Vertrauenswürdigkeit bereitstellt. Diese kann z.B. wie oben beschrieben auf der Anfrage/Antwort Kommunikation basieren.

In einem Ausführungsbeispiel weist das Erstellen der digitalen individuellen Identifizierung einen Toleranzbereich und/oder ein Konfidenzintervall auf. Dies kann den Vorteil haben, dass die Zuverlässigkeit erhöht wird. Beispielsweise kann für die Antworten oder die Antwortparameter (insbesondere die Bearbeitungszeit) ein gewisser Toleranzbereich vorgesehen sein, um (temporäre) Schwankungen auszugeichen.

In einem Ausführungsbeispiel weist das Bemerken auf: Bemerken einer Anwesenheit/Aktivität eines Teilnehmers, der keiner vorhandenen digitalen individuellen Identifizierung zugeordnet ist. Dadurch kann dieser Teilnehmer als neuer Teilnehmer bemerkt werden.

In einem Ausführungsbeispiel weist das Bemerken auf: Durchführen eines kontinuierlichen Monitorings der Netzwerk-Teilnehmer. Hiermit kann die Sicherheit und Zuverlässigkeit erhöht werden. Das Monitoring kann auch von (autorisierten) Teilnehmern durchgeführt werden.

In einem Ausführungsbeispiel weist das Bemerken auf: Durchführen eines regelmäßigen Überprüfens der digitalen individuellen Identifizierungen (und Abgleichen mit den anwesenden Teilnehmern). Dadurch können Abweichungen schnell bemerkt werden.

In einem Ausführungsbeispiel weist das Bemerken auf: der neue Teilnehmer ist bereits bekannt, die Antwort ist jedoch von der bekannten digitalen individuellen Identifizierung unterschiedlich. Dies kann z.B. dadurch bedingt sein, dass eine neue Hardware von diesem Teilnehmer verwendet wird oder er ein Software-Update durchgeführt hat. Ferner kann sich auch die Bearbeitungszeit geändert haben. In diesen Fällen kann es vorteilhaft sein, wenn dieser Teilnehmer eine neue digitale individuelle Identifizierung erhält.

In einem Ausführungsbeispiel ist das Netzwerk-System als digitales Bus-Kommunikationssystem ausgebildet. In einem Ausführungsbeispiel ist das Netzwerk-System drahtgebunden und/oder drahtlos. In einem Ausführungsbeispiel weist das Netzwerk-System zumindest eine Signal-gebende Komponente, insbesondere einen Sensor auf. In einem Ausführungsbeispiel weist das Netzwerk-System zumindest ein (zentrales) Steuersystem Steuereinheit auf. In einem Ausführungsbeispiel ist das Netzwerk-System mit einer Mehrzahl von Funktionen des Schienenfahrzeugs gekoppelt. Diese vorteilhaften Ausgestaltungen können eine direkte und effiziente Implementierung in Schienenfahrzeugen ermöglichen.

In einem Ausführungsbeispiel ist das Netzwerk-System mit zumindest einer Sicherheit-relevanten Funktion gekoppelt. Dadurch kann der Bedarf das Netzwerk-System zuverlässig zu schützen besonders hoch sein. Zudem herrschen im Bahnbereich strenge (gesetzliche) Vorgaben an die Sicherheit, welche entsprechend umgesetzt werden müssen.

In einem Ausführungsbeispiel ist das Netzwerk-System eingerichtet zum Ergreifen einer Kompensationsmaßnahme, wenn ein nicht vertrauenswürdiger Teilnehmer identifiziert ist, insbesondere wobei die Kompensationsmaßnahme zumindest eine der folgenden aufweist: Ignorieren des Teilnehmers, Abschalten des Netzwerkes, Abschalten einer kritischen Funktion (z.B. Klimaanlage), Durchführen einer Sicherheitsbremsung. Dies kann den Vorteil haben, dass auf die Anwesenheit eines nicht vertrauenswürdigen (und gefährlichen) Teilnehmers entsprechend reagiert werden kann. Abhängig von der aktuellen Situation können bestimmte Maßnahmen besonders gut geeignet sein.

In einem Ausführungsbeispiel weist das Netzwerk-System eine Mehrzahl von Schnittstellen auf. In einem Ausführungsbeispiel ist zumindest eine Schnittstelle von einem autorisierten Teilnehmer zugänglich, insbesondere mittels einer Wartungs-Vorrichtung (z.B. ein Laptop, ein Dongle, ein USB-Stick, usw.). Die Schnittstellen können die Benutzerfreundlichkeit des Netzwerk-Systems deutlich erhöhen. Zudem werden damit aber auch mehr Angriffsmöglichkeiten bereitgestellt. Der beschriebene Ansatz zum Überwachen des Netzwerk-Systems kann jedoch einen effizienten und sicheren Betrieb ermöglichen.

In einem Ausführungsbeispiel weist das Schienenfahrzeug zumindest eine Schnittstelle im Fahrzeug-Inneren auf. In einem Ausführungsbeispiel erstreckt sich das Netzwerk-System über zwei oder mehr, insbesondere alle, Wagen des Schienenfahrzeugs. Hierdurch kann eine effiziente und zuverlässige Implementierung ermöglicht werden.

In einem Ausführungsbeispiel kann das Netzwerk-System und/oder das Schienenfahrzeug mit weiteren Komponenten der Schienenfahrzeug Infrastruktur gekoppelt sein (drahtlos und/oder drahtgebunden). Beispielsweise können zwei oder mehr Schienenfahrzeuge miteinander kommunikativ gekoppelt sein. Ferner kann ein Schienenfahrzeug-Kontrollsystem (z.B. von einer Leitstelle) mit dem Netzwerk-System bzw. dem Schienenfahrzeug gekoppelt sein. Das Schienenfahrzeug-Kontrollsystem kann das Netzwerk-System ergänzen und/oder steuern/regeln. In einem Ausführungsbeispiel kann das Netzwerk-System Teil eines größeren Schienenfahrzeug-Infrastruktur-Netzwerkes sein. In einem Beispiel kann Schienenfahrzeug-Kontrollsystem die Teilnehmer überwachen bzw. das Netzwerk-System hierzu triggern.

In einem Ausführungsbeispiel wird das Verfahren in einem Schienenfahrzeug und/oder einer Schienenfahrzeug-Infrastruktur durchgeführt.

Gemäß einem Ausführungsbeispiel wird ein Verfahren beschrieben, das die Teilnehmer eines Kommunikationsbusses analysiert und identifiziert. Angewendet wird es z.B. auf digitalen Bussen wie dem OCN (On-Board Network) einer OBCU (On-Board Control Unit) von TGMT R3 (Trainguard MT R3) oder beispielsweise dem MVB (Main Vehicle Bus), der die OBCU mit Komponenten auf Seite des Fahrzeugs verbindet.

Es ist zu beachten, dass Ausführungsformen der Erfindung unter Bezugnahme auf verschiedene Gegenstände beschrieben wurden. Insbesondere wurden einige Ausführungsformen unter Bezugnahme auf Verfahrensansprüche beschrieben, während andere Ausführungsformen unter Bezugnahme auf Vorrichtungsansprüche beschrieben wurden. Ein Fachmann wird jedoch aus dem Vorstehenden und der folgenden Beschreibung entnehmen, dass, sofern nicht anders angegeben, neben jeder Kombination von Merkmalen, die zu einer Art von Gegenstand gehören, auch jede Kombination von Merkmalen, die sich auf verschiedene Gegenstände beziehen, als von diesem Dokument offenbart gilt. Dies insbesondere auch zwischen Merkmalen der Verfahrensansprüche und Merkmalen der Vorrichtungsansprüche.

Die oben definierten Aspekte und weitere Aspekte der vorliegenden Erfindung ergeben sich aus den nachstehend zu beschreibenden Beispielen der Ausführungsformen und werden unter Bezugnahme auf die Beispiele der Ausführungsformen erläutert. Die Erfindung wird im Folgenden unter Bezugnahme auf Ausführungsformen, auf die die Erfindung jedoch nicht beschränkt ist, näher beschrieben.

### Kurze Beschreibung der Zeichnungen

Figur 1 zeigt ein Schienenfahrzeug mit einem Netzwerk-System, gemäß einem exemplarischen Ausführungsbeispiel der Erfindung.
Figur 2 zeigt ein Schienenfahrzeug mit einem Netzwerk-System, gemäß einem weiteren exemplarischen Ausführungsbeispiel der Erfindung.

### Detaillierte Beschreibung der Zeichnungen

Die Darstellung in den Zeichnungen sind schematisch. Es wird darauf hingewiesen, dass in unterschiedlichen Abbildungen ähnliche oder identische Elemente oder Merkmale mit den gleichen Bezugszeichen oder mit Bezugszeichen versehen sind, die sich von den entsprechenden Bezugszeichen nur innerhalb der ersten Ziffer unterscheiden. Um unnötige Wiederholungen zu vermeiden, werden Elemente oder Merkmale, die bereits in Bezug auf eine zuvor beschriebene Ausführungsform erläutert wurden, an einer späteren Stelle der Beschreibung nicht noch einmal erläutert.

Darüber hinaus werden räumlich relative Begriffe wie "vorne" und "hinten", "oben" und "unten", "links" und "rechts" usw. verwendet, um die Beziehung eines Elements zu einem anderen Element zu beschreiben, wie in den Abbildungen dargestellt. So können die räumlich relativen Begriffe auf verwendete Orientierungen zutreffen, die von der in den Abbildungen dargestellten Orientierung abweichen. Offensichtlich beziehen sich diese räumlich relativen Begriffe lediglich auf eine Vereinfachung der Beschreibung und die in den Abbildungen gezeigte Orientierung und sind nicht notwendigerweise einschränkend, da eine Vorrichtung gemäß einer Ausführungsform der Erfindung andere Orientierungen als die in den Abbildungen dargestellten annehmen kann, insbesondere wenn sie verwendet wird.

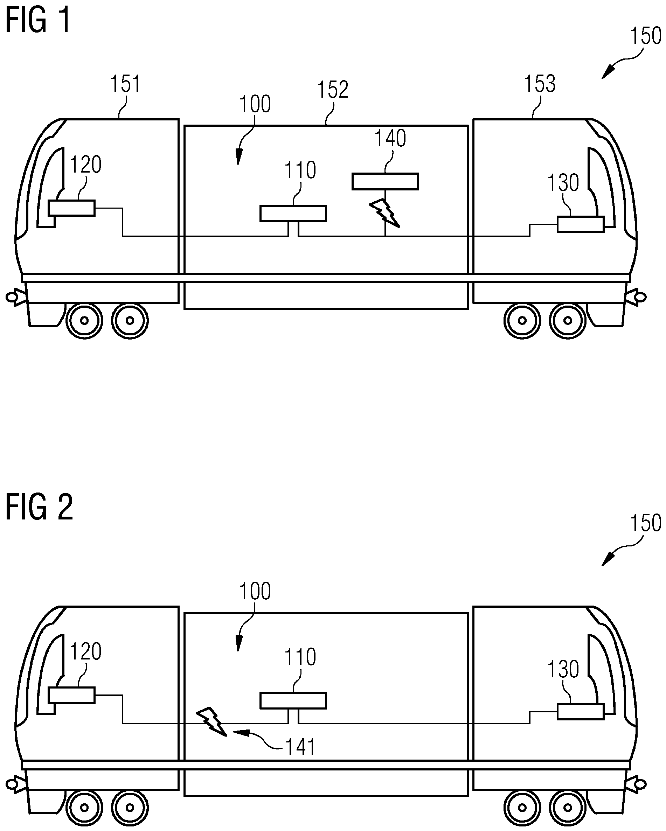

**Figur 1** zeigt ein Schienenfahrzeug 150 mit einem Netzwerk-System 100, gemäß einem exemplarischen Ausführungsbeispiel der Erfindung. In diesem anschaulichen Beispiel ist das Schienenfahrzeug als Zug mit drei Wagen (zwei davon als Lokomotive ausgebildet) 151, 152, 153 ausgestaltet. Das schematisch illustrierte Netzwerk-System 100 ist als drahtgebundenes Bus-Kommunikationssystem ausgebildet und erstreckt sich durch das gesamte Schienenfahrzeug 150, also alle drei Wagen 151, 152, 153 (z.B. als Ringschluss). Im vorderen Wagen 151 ist eine Signal-gebende Komponente 120 angeordnet, z.B. eine Sensorik. Im hinteren Wagen 153 ist eine Schnittstelle 130 für einen autorisierten Benutzer/Teilnehmer vorgesehen. Beispielsweise kann der Teilnehmer die Sensorik des vorderen Wagens 151 auslesen und/oder einen Steuerbefehl geben. Im mittleren Wagen 152 ist ein Steuersystem bzw. eine Steuereinheit 110 angebracht, mit dem z.B. die einzelnen Komponenten/Funktionen 120, 130 des Netzwerk-Systems 100 kontrolliert/reguliert werden können. Das Steuersystem kann auch z.B. von einem Schienenfahrzeug-Kontrollsystem einer Leitstelle gesteuert werden.

Schematisch ist angedeutet, dass sich ein nicht-autorisierter Teilnehmer bzw. ein Angreifer über eine Hardware 140 (z.B. eine vergessene Wartungs-Hardware oder eine Hacker-Vorrichtung) Zugang zu einer Schnittstelle des Netzwerk-System 100 verschafft. Dadurch kann es dem unautorisierten Teilnehmer ermöglicht sein, Daten des Netzwerk-Systems 100 auszulesen und/oder aktiv Steuerbefehle zu erteilen (z.B. Bremsen, Beschleunigen, Türen öffnen, etc.). Dies kann Sicherheit-relevante Bereiche betreffen und daher sehr gefährlich sein.

Das beschriebene Netzwerk-System 100 ist daher eingerichtet zum kontinuierlichen Monitoren der Teilnehmer und Bemerken, wenn ein neuer Teilnehmer in dem Netzwerk-System 100 aktiv ist. Wird ein solcher neuer Teilnehmer bemerkt, der zu keiner bekannten digitalen individuellen Identifizierung passt, so kann das Netzwerk-System 100 (z.B. über Steuersystem 110) eine oder mehr Anfragen stellen. Zusätzlich oder alternativ können auch ein oder mehr (identifizierte) Teilnehmer eine oder mehr Anfragen stellen. Der neue Teilnehmer wird auf die Anfrage antworten, wobei die Antwort(en) und/oder ein Antwortparameter das Erstellen einer neuen digitalen individuellen Identifizierung des neuen Teilnehmers ermöglichen. In einem bevorzugten Beispiel kann der Antwortparameter Bearbeitungszeit verwendet werden, um einen unverwechselbaren Fingerprint des neuen Teilnehmers zu erhalten.

Die digitale individuelle Identifizierung kann insbesondere indikativ für die Vertrauenswürdigkeit des neuen Teilnehmers sein. Die Vertrauenswürdigkeit kann z.B. basierend darauf bewertet werden, wie der neue Teilnehmer auf Anfragen antwortet. Besitzt er z.B. kein Insiderwissen über das Netzwerk-System (nennt z.B. falsche Passwörter), so kann er als nicht vertrauenswürdig eingestuft/identifiziert werden. Wird ein nicht vertrauenswürdiger Teilnehmer entdeckt, so kann eine entsprechende Kompensationsmaßnahme eingeleitet werden. Solch eine Kompensationsmaßnahme kann z.B. eine der folgenden umfassen: Ignorieren des Teilnehmers, Abschalten des Netzwerkes, Abschalten einer kritischen Funktion, Durchführen einer Sicherheitsbremsung.

**Figur 2** zeigt ein Schienenfahrzeug 150 mit einem Netzwerk-System 100, gemäß einem weiteren exemplarischen Ausführungsbeispiel der Erfindung. Dieses System ist prinzipiell baugleich mit jenem der Figur 1. Anders als in Figur 1 findet der Zugriff durch den unautorisierten Teilnehmer nicht durch eine spezielle Hardware 140 an einer Schnittstelle statt. Stattdessen ist schematisch dargestellt, dass der unautorisierte Teilnehmer direkt ein Kabel des Netzwerk-Systems 100 physisch freigelegt hat und sich mit diesem verbunden hat (ohne hierfür vorgesehene Schnittstelle).

Es sei darauf hingewiesen, dass der Begriff "aufweisend" andere Elemente oder Schritte nicht ausschließt und die Verwendung des Artikels "ein" eine Vielzahl nicht ausschließt. Auch Elemente, die in Verbindung mit verschiedenen Ausführungsformen beschrieben werden, können kombiniert werden. Es ist auch darauf hinzuweisen, dass Bezugszeichen in den Ansprüchen nicht so ausgelegt werden sollten, dass sie den Umfang der Ansprüche einschränken.

Unabhängig vom grammatikalischen Geschlecht eines bestimmten Begriffs sind Personen männlicher, weiblicher oder anderer Geschlechteridentität mit umfasst.

## Patentansprüche

1. Ein Netzwerk-System (100) für ein Schienenfahrzeug (150), wobei das Netzwerk-System (100) eingerichtet ist zum:
Bemerken, wenn ein neuer Teilnehmer in dem Netzwerk-System (100) anwesend ist,
Stellen einer Anfrage an den neuen Teilnehmer durch ein Steuersystem (110) und/oder einen autorisierten Teilnehmer des Netzwerk-Systems (100),
Erhalten einer Antwort des neuen Teilnehmers auf die Anfrage, und
Erstellen einer digitalen individuellen Identifizierung des neuen Teilnehmers zumindest teilweise basierend auf der Antwort und/oder einem Antwortparameter des neuen Teilnehmers.

2. Das Netzwerk-System (100) gemäß Anspruch 1,
wobei das Erstellen der digitalen individuellen Identifizierung auf einer Bearbeitungszeit als Antwortparameter basiert.

3. Das Netzwerk-System (100) gemäß einem der vorhergehenden Ansprüche,
wobei das Erstellen der digitalen individuellen Identifizierung auf einer Anfrage nach System-internen Information und der Antwort des neuen Teilnehmers hierauf basiert,
insbesondere wobei die System-interne Information zumindest eine der folgenden aufweist: ein Passwort, eine Prüfsumme, ein Software-Parameter, ein Hardware-Parameter.

4. Das Netzwerk-System (100) gemäß einem der vorhergehenden Ansprüche,
wobei die digitale individuelle Identifizierung indikativ für die Vertrauenswürdigkeit des neuen Teilnehmers ist.

5. Das Netzwerk-System (100) gemäß einem der vorhergehenden Ansprüche,
wobei das Erstellen der digitalen individuellen Identifizierung einen Toleranzbereich und/oder ein Konfidenzintervall aufweist.

6. Das Netzwerk-System (100) gemäß einem der vorhergehenden Ansprüche, wobei das Bemerken zumindest eines der folgenden Merkmale aufweist:
Bemerken einer Aktivität eines Teilnehmers, der keiner vorhandenen digitalen individuellen Identifizierung zugeordnet ist;
Durchführen eines kontinuierlichen Monitorings der Netzwerk-Teilnehmer;
Durchführen eines regelmäßigen Überprüfens der digitalen individuellen Identifizierungen;
wobei der neue Teilnehmer bereits bekannt ist, die Antwort jedoch von der bekannten digitalen individuellen Identifizierung unterschiedlich ist,
insbesondere unterschiedlich hinsichtlich zumindest einem der folgenden: Bearbeitungszeit, Software-Parameter, Hardware-Parameter.

7. Das Netzwerk-System (100) gemäß einem der vorhergehenden Ansprüche, aufweisend zumindest eines der folgenden Merkmale:
wobei das Netzwerk-System (100) als digitales Bus-Kommunikationssystem ausgebildet ist;
wobei das Netzwerk-System (100) drahtgebunden und/oder drahtlos ist;
wobei das Netzwerk-System (100) zumindest eine Signal-gebende Komponente (120), insbesondere einen Sensor aufweist;
wobei das Netzwerk-System (100) zumindest eine Steuereinheit (110) aufweist;
wobei das Netzwerk-System (100) mit einer Mehrzahl von Funktionen des Schienenfahrzeugs (150) gekoppelt ist.

8. Das Netzwerk-System (100) gemäß einem der vorhergehenden Ansprüche,
wobei das Netzwerk-System (100) mit zumindest einer Sicherheit-relevanten Funktion gekoppelt ist.

9. Das Netzwerk-System (100) gemäß einem der vorhergehenden Ansprüche, eingerichtet zum:
Ergreifen einer Kompensationsmaßnahme, wenn ein nicht vertrauenswürdiger Teilnehmer identifiziert ist,
insbesondere wobei die Kompensationsmaßnahme zumindest eine der folgenden aufweist: Ignorieren des Teilnehmers, Abschalten des Netzwerkes, Abschalten einer kritischen Funktion, Durchführen einer Sicherheitsbremsung.

10. Das Netzwerk-System (100) gemäß einem der vorhergehenden Ansprüche,
wobei das Netzwerk-System (100) eine Mehrzahl von Schnittstellen (130) aufweist, und
wobei zumindest eine Schnittstelle (130) von einem autorisierten Teilnehmer zugänglich ist, insbesondere mittels einer Wartungs-Vorrichtung (140).

11. Ein Schienenfahrzeug (150), welches ein Netzwerk-System (100) gemäß einem der vorhergehenden Ansprüche aufweist.

12. Das Schienenfahrzeug (150) gemäß Anspruch 11,
wobei das Netzwerk-System (100) zumindest eine Schnittstelle im Fahrzeug-Inneren aufweist; und/oder
wobei sich das Netzwerk-System (100) über zwei oder mehr, insbesondere alle, Wagen (151, 152, 153) des Schienenfahrzeugs (150) erstreckt.

13. Eine Schienenfahrzeug-Infrastruktur, aufweisend:
ein Schienenfahrzeug gemäß Anspruch 11 oder 12; und
ein Schienenfahrzeug-Kontrollsystem, insbesondere eine Leitstelle, welches mit dem Netzwerk-System (100) gekoppelt ist,
insbesondere wobei das Schienenfahrzeug-Kontrollsystem das Netzwerk-System (100) zumindest teilweise steuert.

14. Ein Verfahren zum Organisieren eines Netzwerk-Systems (100), das Verfahren aufweisend:
Bemerken, wenn ein neuer Teilnehmer in dem Netzwerk-System (100) anwesend ist;
Stellen einer Anfrage an den neuen Teilnehmer durch ein Steuersystem und/oder einen Teilnehmer des Netzwerk-Systems (100);
Erhalten einer Antwort von dem neuen Teilnehmer auf die Anfrage; und
Erstellen einer digitalen individuellen Identifizierung des neuen Teilnehmers zumindest teilweise basierend auf der Antwort und/oder einem Antwortparameter.

15. Das Verfahren gemäß Anspruch 14,
wobei das Verfahren in einem Schienenfahrzeug (150) und/oder einer Schienenfahrzeug-Infrastruktur durchgeführt wird.
